# EUROPEAN PATENT APPLICATION

(11) **EP 4 492 550 A1**
(43) Date of publication of application: **15.01.2025**
(21) Application number: 24166039.8
(22) Date of filing: 25.03.2024
(51) Int. Cl.: H01M 50/209, B60L 50/64, H01M 50/242, H01M 50/249, H01M 50/507

(54) **BATTERY MODULE AND VEHICLE INCLUDING THE SAME**

(30) Priority: 13.07.2023 KR 20230091257
(71) Applicant: Samsung SDI Co., Ltd., Yongin-si, Gyeonggi-do 17084 (KR)
(72) Inventor: HWANG, Yu Sik, 16678 Suwon-si (KR)
(74) Representative: Marks & Clerk LLP

(57) **Abstract**

Disclosed is a battery module and a vehicle including the same, and a problem to be solved is to provide a battery module capable of preventing short circuit of battery cells due to external collision and a vehicle including the same. To this end, disclosed in an example embodiment is a battery module that includes: a battery cell; a module housing provided with a side plate facing a side surface of the battery cell; a cell terminal protruding from the battery cell towards the side plate; a busbar holder disposed between the side plate and the battery cell and connected to the cell terminal; and a reinforcing member connected to the busbar holder and reinforcing the busbar holder.

## Description

### BACKGROUND

### 1. Field

Aspects of embodiments of the present disclosure relate to a battery module and a vehicle including the same.

### 2. Description of the Related Art

In general, with rapid increase in demand for portable electronics, such as notebook computers, video cameras, and portable phones, and commercialization of robots and electric vehicles, various studies have been actively carried out to develop high performance secondary batteries that allow repeated charge and discharge.

Secondary batteries are widely used for power generation or energy storage not only in small devices, such as portable electronics, but also in medium/large devices, such as electric vehicles and energy storage systems (ESSs). In particular, in medium/large devices, multiple battery cells are electrically connected to each other to form a battery module in order to enhance output and/or capacity of the battery.

In recent years, in order to expand charge and discharge capacity of electric vehicles, battery modules with terminals formed on side surfaces of battery cells have been actively developed in the art. However, these battery modules can suffer ignition or explosion due to short circuit of the battery cells in the event of side collision.

The above information disclosed in this Background section is for enhancement of understanding of the background of the present disclosure, and therefore, it may contain information that does not constitute related (or prior) art.

### SUMMARY

Embodiments of the present disclosure provide a battery module capable of preventing short circuit of battery cells due to external collision and a vehicle including the same.

These and other aspects and features of the present disclosure will be described in or will be apparent from the following description of embodiments of the present disclosure.

To solve the above technical problem, a battery module according to one or more embodiments of the present disclosure includes: a battery cell; a module housing provided with a side plate facing a side surface of the battery cell; a cell terminal protruding from the battery cell towards the side plate; a busbar holder disposed between the side plate and the battery cell and connected to the cell terminal; and a reinforcing member connected to the busbar holder and reinforcing the busbar holder.

Each of the cell terminal, the busbar holder and the reinforcing member may be provided as a pair symmetrically disposed at opposite sides of the battery cell.

The reinforcing member may include a first reinforcing cover disposed between the side plate and the busbar holder; and a second reinforcing cover connected to the first reinforcing cover.

One of the first reinforcing cover and the second reinforcing cover may be disposed to face the side plate and the other reinforcing cover may be disposed to face the busbar holder.

The second reinforcing cover may be formed of a material having higher rigidity than the first reinforcing cover and the busbar holder.

The first reinforcing cover may be formed of a resin material and the second reinforcing cover may be formed of a metallic material.

The first reinforcing cover may be coupled to the second reinforcing cover by insert-injection molding.

The battery module may further include a first securing member disposed between the busbar holder and the reinforcing member and supporting the reinforcing member with respect to the busbar holder.

The first reinforcing cover may have an end portion surrounding an end portion of the second reinforcing cover, and the first securing member may include: a first securing groove indented into one of the end portion of the first reinforcing cover and the busbar holder; and a first insert extending from the other one of the end portion of the first reinforcing cover and the busbar holder and inserted into the first securing groove.

The first securing groove may be formed therein with a first catch jaw, and the first insert may include: a first insert body; and a first hook disposed at a distal end of the first insert body and caught by the first catch jaw when inserted into the first securing groove.

The first insert body may be elastically deformable.

The first hook may be gradually narrowed towards a distal end thereof.

The battery module may further include a buffer member connected to the reinforcing member and absorbing (e.g. configured to absorb) impact applied to the reinforcing member.

The buffer member may be disposed between the side plate and the reinforcing member.

The buffer member may be elastically deformable.

The battery module may further include: a second securing member disposed between the reinforcing member and the buffer member and supporting the buffer member with respect to the reinforcing member.

The second securing member may include: a second securing groove indented into one of the end portion of the first reinforcing cover and the buffer member; and a second insert extending from the other one of the end portion of the first reinforcing cover and the buffer member and inserted into the second securing groove.

The second securing groove may be formed therein with a second catch jaw, and the second insert may include: a second insert body; and a second hook disposed at a distal end of the second insert body and caught by the second catch jaw when inserted into the second securing groove.

The second insert body may be elastically deformable.

A vehicle according to one or more embodiments of the present disclosure include: a vehicle body; and a battery module mounted on the vehicle body, wherein the battery module includes a battery cell; a module housing provided with a side plate facing a side surface of the battery cell; a cell terminal protruding from the battery cell towards the side plate; a busbar holder disposed between the side plate and the battery cell and connected to the cell terminal; and a reinforcing member connected to the busbar holder and reinforcing the busbar holder.

At least some of the above and other features of the invention are set out in the claims.

In a battery module according to the present invention and a vehicle including the same, a reinforcing member can prevent external impact from being directly transmitted from the outside of a module housing to a busbar holder, thereby preventing short circuit of a battery cell due to damage to the busbar holder.

In the battery module according to the present invention and the vehicle including the same, the reinforcing member may include a second reinforcing cover formed of a metallic material, thereby further improving structural robustness.

In the battery module according to the present invention and the vehicle including the same, a buffer member can reduce the magnitude of load transmitted to the reinforcing member through primary absorption of impact applied from the outside of the module housing using elastic restoration thereof.

In the battery module according to the present invention and the vehicle including the same, a first securing member and a second securing member can stably support the reinforcing member and the buffer member inside the module housing.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic perspective view of a vehicle according to one embodiment of the present invention.
FIG. 2 is a schematic exploded perspective view of a battery module according to one embodiment of the present invention.
FIG. 3 is a schematic sectional view of the battery module according to the one embodiment of the present invention.
FIG. 4 is a schematic view of a battery cell according to one embodiment of the present invention.
FIG. 5 is a schematic view of a reinforcing member according to one embodiment of the present invention.
FIG. 6 and FIG. 7 are schematic views of a first securing member according to one embodiment of the present invention.
FIG. 8 is a schematic exploded perspective view of a battery module according to another embodiment of the present invention.
FIG. 9 is a schematic sectional view of the battery module according to another embodiment of the present invention.
FIG. 10 and FIG. 11 are schematic views of a second securing member according to another embodiment of the present invention.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

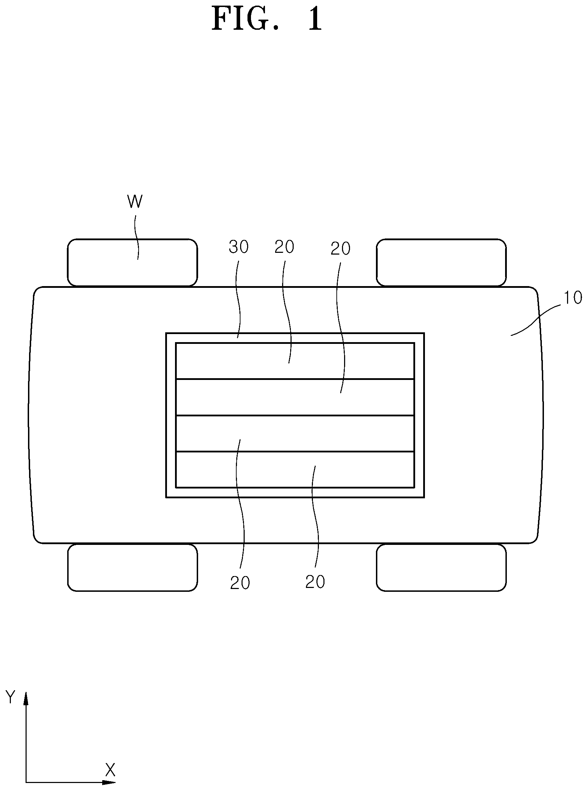

FIG. 1 is a schematic perspective view of a vehicle according to one embodiment of the present invention.

Referring to FIG. 1, the vehicle according to this embodiment includes a vehicle body 10 and a battery module 20.

The vehicle body 10 constitutes a frame of the vehicle and supports the battery module 20 described below. The vehicle body 10 may be exemplified as a frame body, a monocoque body, a skateboard platform, or the like, typically applied to a vehicle. The vehicle body 10 may be connected to a plurality of wheels W rotated by drive force from a motor, an engine, or the like.

The battery module 20 is mounted on the vehicle body 10 and supplies electric power to the motor and various electronic devices of the vehicle (not shown). The battery module 20 may be provided in plural. The plurality of battery modules 20 may be received inside a pack housing 30 coupled to the vehicle body 10. The plurality of battery modules 20 may be disposed to have a length parallel to a longitudinal direction of the vehicle body 10 (X-axis direction in FIG. 1). The plurality of battery modules 20 may be arranged in a width direction of the vehicle body 10 (Y-axis direction in FIG. 1).

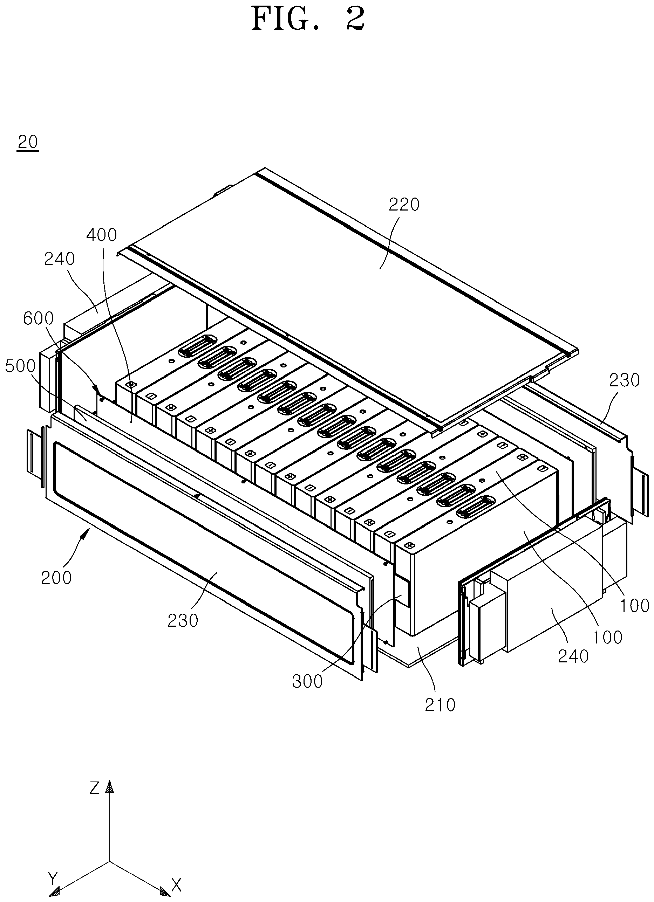

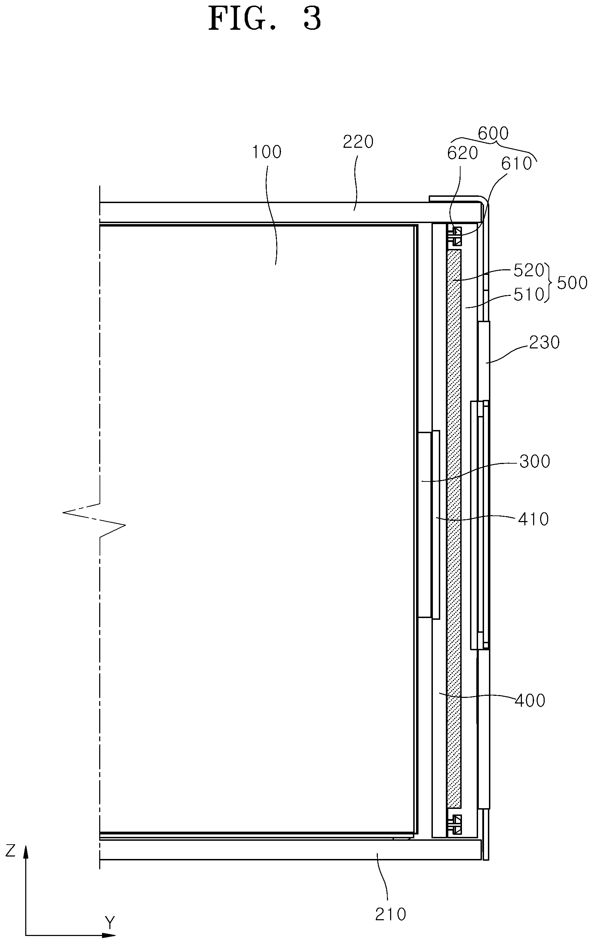

FIG. 2 is a schematic exploded perspective view of a battery module according to one embodiment of the present invention and FIG. 3 is a schematic sectional view of the battery module according to the one embodiment of the present invention.

Referring to FIG. 2 and FIG. 3, the battery module 20 according to this embodiment includes battery cells 100, a module housing 200, cell terminals 300, busbar holders 400, and reinforcing members 500.

The battery cells 100 act as unit structures storing and supplying electric power inside the battery module 1.

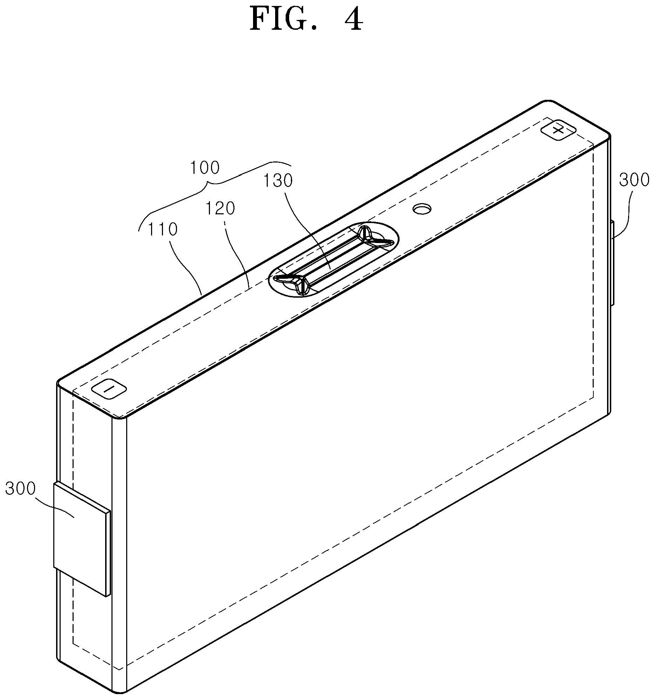

FIG. 4 is a schematic view of a battery cell according to one embodiment of the present invention.

Referring to FIG. 4, the battery cell 100 according to this embodiment may be exemplified as an angular secondary cell in which an electrode assembly 120 having a cathode plate (not shown) and an anode plate (not shown) at opposite sides of a separator (not shown) is disposed inside a case 110 and is capable of charging and discharging a predetermined quantity of electric power.

The case 110 may have a hollow parallelepiped shape. The case 110 may be formed on an upper surface thereof with a vent 130 that is opened when an internal pressure of the case 110 increases. The vent 130 may have a smaller thickness than the thickness of the case 110.

The electrode assembly 120 may be formed as a wound type in which the separator, the cathode plate and the anode plate are wound into a roll, or as a stack type in which the separator, the cathode plate and the anode plate are stacked one above another.

The battery cell 100 may be provided in plural. The plurality of battery cells 100 may be arranged in one direction, for example, in the longitudinal direction of the vehicle body 10. Adjacent battery cells 100 may be disposed parallel to each other such that a front surface of one battery cell 100 faces a rear surface of another battery cell 100 adjacent thereto. Here, among peripheral surfaces of the battery cell 100, the front and rear surfaces of the battery cell 100 may mean surfaces perpendicular to the longitudinal direction of the vehicle body 10, that is, the X-axis direction with reference to FIG. 1 and FIG. 2. In addition, among the peripheral surfaces of the battery cell 100, side surfaces of the battery cell 100 may mean surfaces perpendicular to the width direction of the vehicle body 10, that is, the Y-axis direction with reference to FIG. 1 and FIG. 2. It should be noted that the number of battery cells 100 is not limited to that shown in FIG. 2 and may be modified in various ways depending on the size of the battery module 20 and the like.

The module housing 200 surrounds the battery cells 100 and acts to protect the battery cells 100 from foreign matter and impact.

According to this embodiment, the module housing 200 may include a bottom plate 210, a top plate 220, side plates 230, and end plates 240.

The bottom plate 210 and the top plate 220 may be formed in a plate shape to face lower and upper surfaces of the battery cells 100, respectively. The bottom plate 210 and the top plate 220 may be disposed parallel to the lower and upper surfaces of the battery cells 100, respectively. The bottom plate 210 and the top plate 220 may contact the lower and upper surfaces of the battery cell 100, respectively.

The side plates 230 may be formed in a plate shape to face side surfaces of the battery cells 100, respectively. The side plates 230 may extend in a longitudinal direction thereof corresponding to an alignment direction of the plurality of battery cells 100 to be parallel to the side surfaces of the battery cells 100. Each of the side plates 230 may be separated a predetermined distance from the side surfaces of the battery cells 100. Accordingly, a space may be formed between each of the side plates 230 and the side surfaces of the battery cells 100 to receive the busbar holder 400 and the reinforcing member 500 therein.

Each of the side plates 230 may be disposed such that lower and upper ends of the side plate 230 face an upper surface of the bottom plate 210 and a lower surface of the top plate 220, respectively. The lower and upper ends of the side plate 230 may be directly coupled to the upper surface of the bottom plate 210 and the lower surface of the top plate 220, respectively. In this case, the side plates 230 may be coupled to the bottom plate 210 and the top plate 220 by various types of coupling means, such as bolting, welding, bonding, fitting, latching, and the like.

The side plates 230 may be provided as a pair of side plates. The pair of side plates 230 may be disposed such that inner surfaces of the side plates individually face opposite side surfaces of each of the battery cells 100.

The end plates 240 may be disposed to intersect the side plates 230 while facing the front and rear surfaces of the battery cells 100, respectively. More specifically, the end plates 240 may be provided as a pair of end plates. The pair of end plates 240 may be disposed such that inner surfaces of the end plates face the front surface of the battery cell 100 placed at one side among the plurality of battery cells 100 and the rear surface of the battery cell 100 placed at the other side among the plurality of battery cells 100.

The end plates 240 may have a substantially plate shape. The end plates 240 may extend in a longitudinal direction thereof corresponding to a direction perpendicular to the arrangement direction of the plurality of battery cells 100 and may be disposed parallel to the front and rear surfaces of the battery cells 100, respectively.

Each of the end plates 240 may be coupled at opposite ends thereof to the side plates 230. More specifically, one of the pair of end plates 240 may be coupled at the opposite ends thereof to one end of each of the side plates 230, and the other end plate 240 may be coupled at the opposite ends thereof to the other end of each of the side plates 230. In this case, the end plates 240 may be coupled to the side plates 230 by various types of coupling means, such as bolting, welding, bonding, fitting, latching, and the like.

The cell terminal 300 may protrude from the side surface of the battery cell 100 towards the side plate 230. The cell terminal 300 may protrude from the side surface of battery cell 100 in the width direction of the vehicle body 10, that is, in the Y-axis direction with reference to FIG. 1 and FIG. 2. The cell terminal 300 may be electrically connected to the electrode assembly 120 disposed inside the case 110.

The cell terminals 300 may be provided as a pair of cell terminals. The pair of cell terminals 300 may be symmetrically disposed at opposite sides of the battery cells 100. That is, the pair of cell terminals 300 may protrude from the opposite side surfaces of the battery cell 100 in opposite directions and distal ends of the cell terminals 300 face the pair of side plates 230, respectively.

The pair of cell terminals 300 may have opposite polarities. More specifically, among the pair of cell terminals 300, one cell terminal 300 may be electrically connected to the cathode plate of the electrode assembly 120 to exhibit a positive polarity and the other cell terminal may be electrically connected to the anode plate of the electrode assembly 120 to exhibit a negative polarity.

Each of the busbar holders 400 may be disposed between the side plate 230 and the battery cells 100. The busbar holders 400 may have a substantially planar plate shape. Each of the busbar holders 400 may be disposed parallel to the side plate 230 and the battery cells 100 such that both surfaces of the busbar holder 400 face the side surfaces of the side plate 230 and the battery cells 100.

The busbar holders 400 may be electrically connected to the cell terminals 300. More specifically, an inner surface of the busbar holder 400 facing the battery cell 100 may be formed with a busbar 410 that contacts the cell terminals 300. The busbar 410 may be formed of an electrically conductive material, such as copper, aluminium, nickel, and the like. The busbar 410 may be provided in plural. The plurality of busbars 410 may connect the plurality of battery cells 100 in series or in parallel. The busbars 410 may be coupled to the cell terminals 300 by welding.

The busbar holders 400 may be provided as a pair of busbar holders. The pair of busbar holders 400 may be symmetrically disposed at the opposite sides of the battery cells 100. That is, with the battery cells 100 disposed between the pair of busbar holders 400, the busbar holders 400 may be spaced apart from each other in the width direction of the vehicle body 10, that is, in the Y-axis direction with reference to FIG. 2 and FIG. 3. Among the pair of the busbar holders 400, one busbar holder 400 may be disposed between the side plate 230 and the cell terminal 300 disposed at one side of the battery cells 100 and the other busbar holder 400 may be disposed between the side plate 230 and the cell terminal 300 disposed at the other side of the battery cells 100.

The reinforcing members 500 are connected to the busbar holders 400 to reinforce the busbar holders 400. That is, the reinforcing member 500 may act as a component that has rigidity to block external impact from being directly transmitted to the corresponding busbar holder 400. Each of the reinforcing members 500 may be disposed between the side plate 230 and the busbar holder 400. The reinforcing members 500 may be provided as a pair of reinforcing members. The pair of reinforcing members 500 may be symmetrically disposed at the opposite sides of the battery cells 100. More specifically, among the pair of reinforcing members 500, one reinforcing member 500 may be disposed between the side plate 230 and the busbar holder 400 disposed at one side of the battery cells 100, and the other reinforcing member 500 may be disposed between the side plate 230 and the busbar holder 400 disposed at the other side of the battery cells 100. The reinforcing members 500 may be directly connected to the busbar holders 400 by welding, bolding, and the like. Alternatively, the reinforcing members 500 may be indirectly connected to the busbar holders 400 by a separate member (not shown).

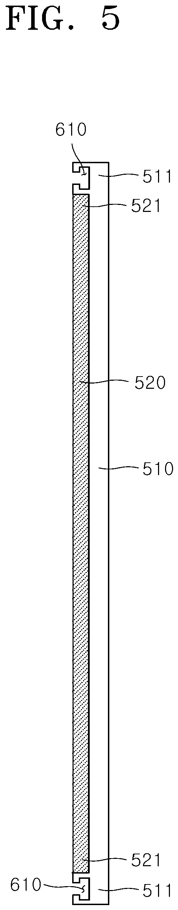

FIG. 5 is a schematic view of a reinforcing member according to one embodiment of the present invention.

Referring to FIG. 3 and FIG. 5, the reinforcing member 500 according to this embodiment may include a first reinforcing cover 510 and a second reinforcing cover 520.

The first reinforcing cover 510 may define an external appearance of one side of the reinforcing member 500 and may support the second reinforcing cover 520. The first reinforcing cover 510 may have a substantially planar plate shape and may be disposed between the side plate 230 and the busbar holder 400. The first reinforcing cover 510 may be disposed parallel to the side plate 230 and the busbar holder 400.

The second reinforcing cover 520 may define an external appearance of the other side of the reinforcing member 500 and may be coupled to the first reinforcing cover 510. The second reinforcing cover 520 may have a substantially planar plate shape. The second reinforcing cover 520 may be disposed parallel to the first reinforcing cover 510 to face the first reinforcing cover 510.

The first reinforcing cover 510 and the second reinforcing cover 520 may be stacked between the side plate 230 and the busbar holder 400 in the width direction of the vehicle body 10, that is, in the Y-axis direction with reference to FIG. 3. Each of the first reinforcing cover 510 and the second reinforcing cover 520 may be disposed to face any one of the side plate 230 and the busbar holder 400. For example, referring to FIG. 3, the first reinforcing cover 510 may be disposed to face the side plate 230 and the second reinforcing cover 520 may be disposed to face the busbar holder 400. However, the first reinforcing cover 510 and the second reinforcing cover 520 are not limited thereto. Alternatively, the first reinforcing cover 510 may be disposed to face the busbar holder 400 and the second reinforcing cover 520 may be disposed to face the side plate 230.

The second reinforcing cover 520 may be formed of a material having higher rigidity than the first reinforcing cover 510 and the busbar holder 400. For example, the first reinforcing cover 510 and the busbar holder 400 may be formed of a resin material, such as a polyamide resin, a polyethylene resin, a polypropylene resin, an epoxy resin, and the like, and the second reinforcing cover 520 may be formed of a metallic material, such as steel and the like. Accordingly, the second reinforcing cover 520 reinforces overall rigidity of the reinforcing member 500.

In this case, the first reinforcing cover 510 may be coupled to the second reinforcing cover 520 by insert injection molding. That is, the first reinforcing cover 510 may be integrally coupled to the second reinforcing cover 520 in the course of being melted in a liquid state and injected into an injection mold into which the second reinforcing cover 520 is inserted. The second reinforcing cover 520 may have a smaller area than the first reinforcing cover 510. In this case, the first reinforcing cover 510 may have an end portion 511 surrounding the entirety of an end portion 521 of the second reinforcing cover 520.

According to this embodiment, the battery module 20 may further include a first securing member 600.

The first securing member 600 is disposed between the busbar holder 400 and the reinforcing member 500 and supports the reinforcing member 500 with respect to the busbar holder 400. That is, the first securing member 600 may act as a component that aligns the reinforcing member 500 with respect to the busbar holder 400 while preventing displacement of the reinforcing member 500.

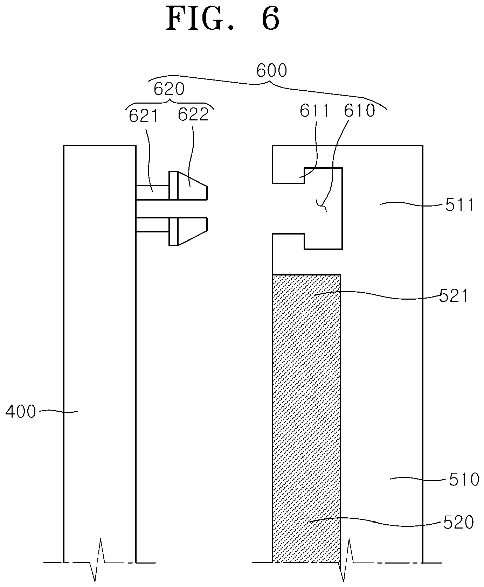

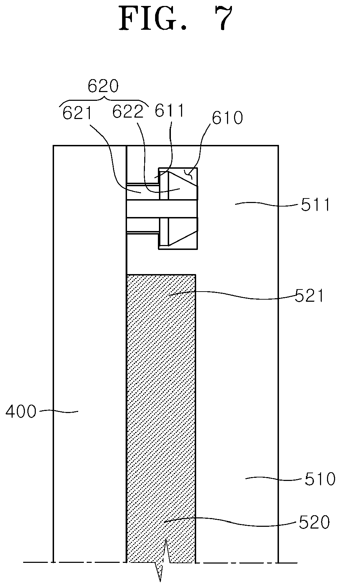

FIG. 6 and FIG. 7 are schematic views of a first securing member according to one embodiment of the present invention.

Referring to FIG. 6 and FIG. 7, the first securing member 600 according to this embodiment includes a first securing groove 610 and a first insert 620.

The first securing groove 610 may be indented into one of the end portion 511 of the first reinforcing cover 510 and the busbar holder 400. Hereinafter, as shown in FIG. 6 and FIG. 7, the first securing groove 610 will be exemplified as being indented into the end portion 511 of the first reinforcing cover 510. However, the first securing groove 610 is not limited to this structure and may be indented into the busbar holder 400.

The first securing groove 610 may be indented into one surface of the end portion 511 of the first reinforcing cover 510, which faces the busbar holder 400. One surface of the first securing groove 610 facing the busbar holder 400 may be open. A cross-section of the first securing groove 610 may be modified into various shapes, such as a polygonal cross-section, a circular cross-section, an elliptical cross-section, and the like.

The first securing groove 610 may be formed therein with a first catch jaw 611 coupled to the first insert 620 described below. The first catch jaw 611 may be formed in a jaw shape protruding from an inner surface of the first securing groove 610 towards an interior space of the first securing groove 610. The first catch jaw 611 may continuously extend along an inner circumferential surface of the first securing groove 610 to form a ring shape.

The first insert 620 may extend from the other one of the end portion 511 of the first reinforcing cover 510 and the busbar holder 400. The first insert 620 may be inserted into the first securing groove 610 as the busbar holder 400 and the reinforcing member 500 approach each other to have a predetermined distance therebetween. As the first insert 620 is inserted into the first securing groove 610, the first insert 620 may be caught by the first catch jaw 611 on the first securing groove 610.

Hereinafter, the first insert 620 will be exemplified as extending from the busbar holder 400, as shown in FIG. 6 and FIG. 7. However, it should be understood that the first insert 620 is not limited to this structure. In the structure wherein the first securing groove 610 is indented into the busbar holder 400, the first insert 620 may extend from the end portion 511 of the first reinforcing cover 510.

The first insert 620 according to this embodiment may include a first insert body 621 and a first hook 622.

The first insert body 621 may have a bar shape extending from one surface of the busbar holder 400, which faces the reinforcing member 500, towards the reinforcing member 500. The first insert body 621 may extend in a longitudinal direction thereof corresponding to the Y-axis direction with reference to FIG. 3. The first insert body 621 may be elastically deformable. Accordingly, the first insert body 621 may allow adjustment in location of the first hook 622 through elastic deformation while the first hook 622 is inserted into the first securing groove 610.

The first insert body 621 may be provided in plural. The plurality of first insert bodies 621 may be disposed parallel to each other. The plurality of first insert bodies 621 may be spaced apart from each other along a circumference about a central axis of the first securing groove 610. Although the number of first insert bodies 621 is shown as two in FIG. 6, it should be understood that the number of first insert bodies 621 may be modified in various ways.

The first hook 622 may be disposed at a distal end of the first insert body 621. The first hook 622 may be inserted into the first securing groove 610 as the busbar holder 400 and the reinforcing member 500 move toward each other. The first hook 622 may have a shape having a width gradually decreasing in a forward direction. With this structure, the first hook 622 can be more efficiently inserted into the first securing groove 610. A rear end of the first hook 622 may have a larger cross-sectional area than the first insert body 621. When the first hook 622 is completely inserted into the first securing groove 610, the rear end of the first hook 622 is brought into contact with the first catch jaw 611 and is caught by the first catch jaw 611. Accordingly, the first hook 622 can restrict the busbar holder 400 and the reinforcing member 500 from moving away from each other.

Next, a battery module 20' according to another embodiment of the present invention will be described.

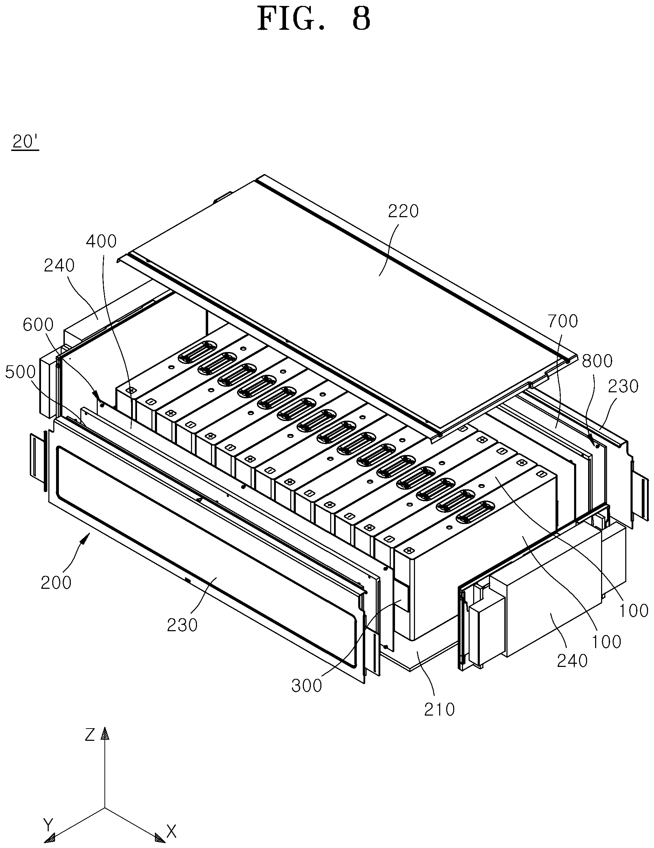

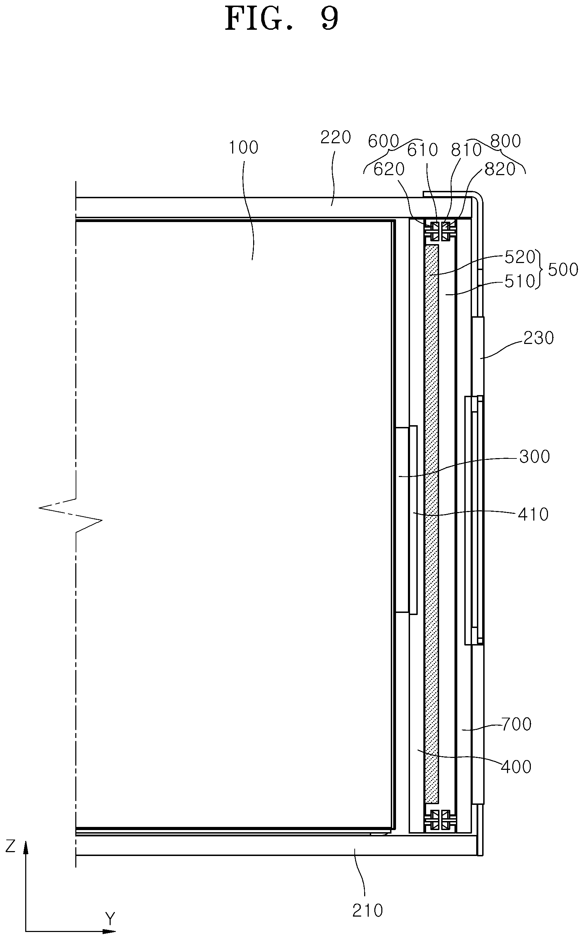

FIG. 8 is a schematic exploded perspective view of a battery module according to another embodiment of the present invention and FIG. 9 is a schematic sectional view of the battery module according to another embodiment of the present invention.

Referring to FIG. 8 and FIG. 9, the battery module 20' according to this embodiment may include battery cells 100, a module housing 200, cell terminals 300, busbar holders 400, reinforcing members 500, first securing members 600, buffer members 700, and second securing members 800.

The battery module 20' according to this embodiment is similar to the battery module 20 according to the above embodiment excluding the buffer members 700 and the second securing members 800.

Accordingly, the following description of the battery module 20' according to this embodiment will focus on the buffer member 700 and the second securing member 800, which are not present in the battery module 20 according to the above embodiment. For description of other components of the battery module 20', refer to the description of the battery module 20 according to the above embodiment of the invention.

The buffer member 700 is connected to the reinforcing member 500 and absorbs impact applied to the reinforcing member 500. That is, the buffer member 700 may act as a component that reduces the magnitude of load applied to the reinforcing member 500 by primarily absorbing external impact applied to the module housing 200.

The buffer member 700 has a substantially plate shape and may be disposed between the side plate 230 and the reinforcing member 500. Both surfaces of the buffer member 700 may contact an inner surface of the side plate 230 and an outer surface of the reinforcing member 500, respectively. The buffer member 700 may be elastically deformable. For example, the buffer member 700 may be formed of a flexible material, such as rubber, silicone, and the like. Accordingly, when external impact is applied to the side plate 230, the buffer member 700 can absorb the external impact through compressive deformation by elastic restoration.

The second securing member 800 is disposed between the reinforcing member 500 and the buffer member 700 and supports the buffer member 700 with respect to the reinforcing member 500. That is, the second securing member 800 may act as a component that aligns the buffer member 700 with respect to the reinforcing member 500 while preventing displacement of the buffer member 700.

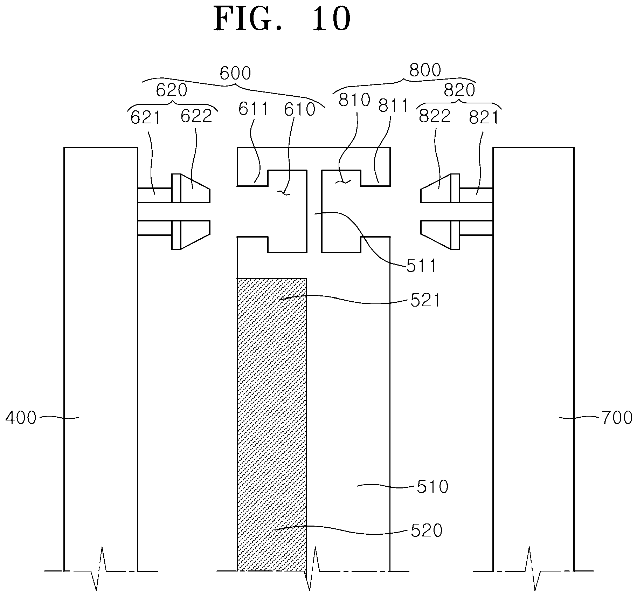

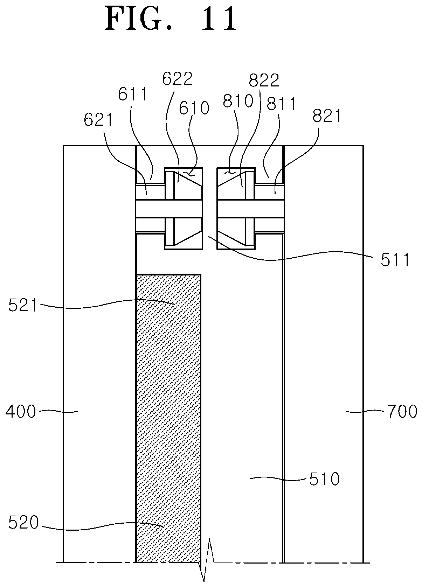

FIG. 10 and FIG. 11 are schematic views of a second securing member according to another embodiment of the present invention.

Referring to FIG. 10 and FIG. 11, the second securing member 800 according to this embodiment may include a second securing groove 810 and a second insert 820.

The second securing groove 810 may be indented into one of the end portion 511 of the first reinforcing cover 510 and the buffer member 700. Hereinafter, as shown in FIG. 10 and FIG. 11, the second securing groove 810 will be exemplified as being indented into the end portion 511 of the first reinforcing cover 510. However, the second securing groove 810 is not limited to this structure and may be indented into the buffer member 700.

The second securing groove 810 may be indented into one surface of the end portion 511 of the first reinforcing cover 510, which faces the buffer member 700. One surface of the second securing groove 810 facing the buffer member 700 may be open. A cross-section of the second securing groove 810 may be modified into various shapes, such as a polygonal cross-section, a circular cross-section, an elliptical cross-section, and the like.

The second securing groove 810 may be spaced apart from the first securing groove 610. A central axis of the first securing groove 610 may be coaxial with or offset from a central axis of the second securing groove 810.

The second securing groove 810 may be formed therein with a second catch jaw 811 coupled to the second insert 820 described below. The second catch jaw 811 may be formed in a jaw shape protruding from an inner surface of the second securing groove 810 towards an interior space of the second securing groove 810. The second catch jaw 811 may continuously extend along an inner circumferential surface of the second securing groove 810 to form a ring shape.

The second insert 820 may extend from the other one of the end portion 511 of the first reinforcing cover 510 and the buffer member 700. The second insert 820 may be inserted into the second securing groove 810 as the buffer member 700 and the reinforcing member 500 approach each other to have a predetermined distance therebetween. As the second insert 820 is inserted into the second securing groove 810, the second insert 820 may be caught by the second catch jaw 811 on the second securing groove 810.

Hereinafter, the second insert 820 will be exemplified as extending from the buffer member 700, as shown in FIG. 10 and FIG. 11. However, it should be understood that the second insert 820 is not limited to this structure. In the structure wherein the second securing groove 810 is indented into the buffer member 700, the second insert 820 may extend from the end portion 511 of the first reinforcing cover 510.

The second insert 820 according to this embodiment may include a second insert body 821 and a second hook 822.

The second insert body 821 may have a bar shape extending from one surface of the buffer member 700, which faces the reinforcing member 500, towards the reinforcing member 500. That is, the second insert body 821 may extend in a direction opposite to the first insert body 621. The second insert body 821 may extend in a longitudinal direction thereof corresponding to the Y-axis direction with reference to FIG. 3. The second insert body 821 may be elastically deformable. Accordingly, the second insert body 821 may allow adjustment in location of the second hook 822 through elastic deformation while the second hook 822 is inserted into the second securing groove 810.

The second insert body 821 may be provided in plural. A plurality of second insert bodies 821 may be disposed parallel to each other. The plurality of second insert bodies 821 may be spaced apart from each other along a circumference about a central axis of the second securing groove 810. Although the number of second insert bodies 821 is shown as two in FIG. 10, it should be understood that the number of second insert bodies 821 may be modified in various ways.

The second hook 822 may be disposed at a distal end of the second insert body 821. The second hook 822 may be inserted into the second securing groove 810 as the buffer member 700 and the reinforcing member 500 move toward each other. The second hook 822 may have a shape having a width gradually decreasing in a forward direction. With this structure, the second hook 822 can be more efficiently inserted into the second securing groove 810. A rear end of the second hook 822 may have a larger cross-sectional area than the second insert body 821. When the second hook 822 is completely inserted into the second securing groove 810, the rear end of the second hook 822 is brought into contact with the second catch jaw 811 and is caught by the second catch jaw 811. Accordingly, the second hook 822 can restrict the buffer member 700 and the reinforcing member 500 from moving away from each other.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalent.

## Claims

1. A battery module comprising:
a battery cell;
a module housing provided with a side plate facing a side surface of the battery cell;
a cell terminal protruding from the battery cell towards the side plate;
a busbar holder disposed between the side plate and the battery cell and connected to the cell terminal; and
a reinforcing member connected to the busbar holder and reinforcing the busbar holder.

2. The battery module according to claim 1, wherein each of the cell terminal, the busbar holder and the reinforcing member is provided as a pair symmetrically disposed at opposite sides of the battery cell.

3. The battery module according to claim 1 or claim 2, wherein the reinforcing member comprises: a first reinforcing cover disposed between the side plate and the busbar holder; and a second reinforcing cover connected to the first reinforcing cover.

4. The battery module according to claim 3, wherein one of the first reinforcing cover and the second reinforcing cover is disposed to face the side plate and the other of the first reinforcing cover and the second reinforcing cover is disposed to face the busbar holder.

5. The battery module according to claim 3 or claim 4, wherein the first reinforcing cover is formed of a resin material and the second reinforcing cover is formed of a metallic material.

6. The battery module according to claim 5, wherein the first reinforcing cover is coupled to the second reinforcing cover by insert-injection molding.

7. The battery module according to any one of claims 3 to 6, further comprising:
a first securing member disposed between the busbar holder and the reinforcing member and supporting the reinforcing member with respect to the busbar holder.

8. The battery module according to claim 7, wherein:
the first reinforcing cover has an end portion surrounding an end portion of the second reinforcing cover; and
the first securing member comprises: a first securing groove indented into one of the end portion of the first reinforcing cover and the busbar holder; and a first insert extending from the other one of the end portion of the first reinforcing cover and the busbar holder and inserted into the first securing groove.

9. The battery module according to claim 8, wherein:
the first securing groove is formed therein with a first catch jaw; and
the first insert comprises: a first insert body; and a first hook disposed at a distal end of the first insert body and caught by the first catch jaw when inserted into the first securing groove.

10. The battery module according to claim 8 or claim 9, further comprising:
a buffer member connected to the reinforcing member and configured to absorb impact applied to the reinforcing member.

11. The battery module according to claim 10, wherein the buffer member is disposed between the side plate and the reinforcing member.

12. The battery module according to claim 10 or claim 11, further comprising:
a second securing member disposed between the reinforcing member and the buffer member and supporting the buffer member with respect to the reinforcing member.

13. The battery module according to claim 12, wherein the second securing member comprises:
a second securing groove indented into one of the end portion of the first reinforcing cover and the buffer member; and
a second insert extending from the other one of the end portion of the first reinforcing cover and the buffer member and inserted into the second securing groove.

14. The battery module according to claim 13, wherein:
the second securing groove is formed therein with a second catch jaw; and
the second insert comprises: a second insert body; and a second hook disposed at a distal end of the second insert body and caught by the second catch jaw when inserted into the second securing groove.

15. A vehicle comprising: a vehicle body; and a battery module mounted on the vehicle body, the battery module comprising:
a battery cell;
a module housing provided with a side plate facing a side surface of the battery cell;
a cell terminal protruding from the battery cell towards the side plate;
a busbar holder disposed between the side plate and the battery cell and connected to the cell terminal; and
a reinforcing member connected to the busbar holder and reinforcing the busbar holder.
